# EUROPÄISCHE PATENTANMELDUNG

(11) **EP 4 287 499 A1**
(43) Veröffentlichungstag der Anmeldung: **06.12.2023**
(21) Anmeldenummer: 22176168.7
(22) Anmeldetag: 30.05.2022
(51) Int. Cl.: H02P 29/024, H02P 25/022

(54) **ÜBERWACHUNG EINER SYNCHRONMASCHINE**

(71) Anmelder: Siemens Aktiengesellschaft, 80333 München (DE)
(72) Erfinder: Hofmockel, Julia, 90491 Nürnberg (DE); Endres, Johannes, 97486 Königsberg (DE); Dumke, Sascha, 90489 Nürnberg (DE); Winter, Jens, 37235 Hessisch Lichtenau (DE)
(74) Vertreter: Siemens Patent Attorneys

(57) **Zusammenfassung**

Bei einem Verfahren zur Überwachung einer Synchronmaschine, insbesondere zur Überwachung einer Erregereinrichtung einer Synchronmaschine, wird ein vom Leistungsfaktor der Synchronmaschine abhängiger Einzelwert gemessen, wobei aus einer Vielzahl von Einzelwerten und/oder davon abhängigen Werten ein Überwachungswert (3) gebildet wird. Das Verfahren ist mittels einer Überwachungseinrichtung ausführbar.

## Beschreibung

Die Erfindung betrifft ein Verfahren bzw. eine Einrichtung zur Überwachung einer Synchronmaschine, insbesondere ein Verfahren bzw. eine Einrichtung zur Überwachung einer Erregereinrichtung einer Synchronmaschine. Insbesondere betrifft die Erfindung ein Verfahren zur Erkennung einer fehlerhaften Erregereinrichtung bei einem Synchronmotor im Netz- bzw. Umrichterbetrieb.

Synchronmaschinen sind elektrische Maschinen, welche als Synchronmotor oder als Synchrongenerator eingesetzt werden können. Synchronmaschinen können selbsterregt oder fremderregt sein. Fremderregte Synchronmaschinen weisen eine Erregereinrichtung auf. Selbsterregte Synchronmaschine weisen insbesondere Permanentmagnete zur Erregung auf. Beim Betrieb der Synchronmaschine ist auf den Leistungsfaktor zu achten. Der Leistungsfaktor (auch Wirkleistungsfaktor genannt) ist in der Wechselstromtechnik das Verhältnis vom Betrag der Wirkleistung P zur Scheinleistung S. Bei sinusförmigen Wechselgrößen ist der Wirkfaktor definiert aus dem Verhältnis Wirkleistung P zur Scheinleistung S. Dies wird auch als cosϕ bezeichnet. Bei Synchronmotoren im Netz- oder Umrichterbetrieb können durch die Erregereinrichtung die Leistungsfaktoren verstellt bzw. eingestellt werden. Allgemein kann von einem Leistungsfaktor mit Wert 1 ausgegangen werden, da dies aus Sicht der Verluste und der Bereitstellung des Drehmoments der optimale Wert ist. Prinzipiell kann man den Motor auch an anderen Arbeitspunkten betreiben, das muss im Algorithmus entsprechend berücksichtigt werden können (variable oder statische Sollwertvorgabe des Leistungsfaktors). Oft ist in der Inbetriebsetzungsphase eine optimale Einstellung des Erregerkreises nicht möglich, da nicht alle Punkte im Probebetrieb angefahren werden können. Eine nicht optimale Einstellung ist für den Betreiber nicht unmittelbar problematisch, wenn die Performance hinsichtlich des Drehmoments genügend ist. Der Erregerregelkreis kann hierbei unter Umständen insbesondere eher sekundär gesehen werden. Eine fehlerhafte oder falsch parametrierte Erregereinrichtung oder defekte Erregereinrichtung führt insbesondere zu Anomalien im Leistungsfaktor.

Eine Aufgabe der Erfindung ist es, einen Fehler, eine Anomalie bzw. einen Defekt zu erkennen. Der oder die Fehler betreffen insbesondere eine fehlerhafte und/oder falsch parametrierte Erregereinrichtung und/oder eine defekte Erregereinrichtung.

Eine Lösung der Aufgabe ergibt sich nach einem Verfahren nach Anspruch 1, einer Überwachungseinrichtung nach Anspruch 7 bzw. einem Computerprogrammprodukt nach Anspruch 8.

Bei einem Verfahren zur Überwachung einer Synchronmaschine, insbesondere zur Überwachung einer Erregereinrichtung einer Synchronmaschine, wird ein vom Leistungsfaktor der Synchronmaschine abhängiger Einzelwert gemessen, wobei aus einer Vielzahl von Einzelwerten und/oder davon abhängigen Werten ein Überwachungswert gebildet wird. Der Einzelwert ist also beispielsweise der Leistungsfaktor selbst. Mithilfe der Überwachung von Einzelwerten und der Bildung eines Überwachungswertes aus den Einzelwerten kann automatisiert eine Anomalie erkannt werden. Dies ist auch in einem Langzeitbetrieb der Synchronmaschine möglich. Bei der Überwachung über eine lange Zeit wird also insbesondere nicht der Leistungsfaktor von einer Netzperiode zur nächsten überwacht, sondern über längere Zeiträume von Minuten, Stunden, Tagen, Wochen bzw. Monaten. So ist eine automatisierte Identifikation von Anomalien während des Langzeitbetriebs beispielsweise eines Synchronmotors mit Erregereinrichtung möglich. Ein Status "normal" oder "anormal", der den aktuellen Gesundheitszustand der Erregereinrichtung beschreibt, kann so verfügbar gemacht werden. Das Potential der Einsparung allein der Verluste ist bei größeren Motoren im Bereich von 50000kWh pro Jahr. Auf den Lebenszyklus ergibt sich ein beachtliches Einsparpotential. Die Überwachung erfolgt also insbesondere bei Synchronmaschinen größerer Leistung von mehreren hundert Kilowatt oder einigen Megawatt.

Durch eine Langzeiterfassung der Erregerwerte von Synchronmotoren kann sich eine automatisierte Auswertung des Leistungsfaktors ergeben bzw. wird diese dadurch ermöglicht. Anomalien können innerhalb kurzer Zeit automatisch bestimmt werden. Auch eine Änderung (z.B. Reparatur) der Erregereinrichtung wird beispielsweise anhand der Daten automatisiert erkannt. Der Fehlerstatus wird beispielsweise entsprechend zurückgesetzt.

Der Überwachungswert ist insbesondere eine Differenz aus einem Sollwert für den Leistungsfaktor und dem ermittelten Leistungsfaktor bzw. auch nicht davon. Der ermittelte Leistungsfaktor ist ein Beispiel für einen Einzelwert. Der Überwachungswert lässt sich beispielsweise wie folgt ermitteln. In einem Zeitraum werden in einem zeitlichen Abstand Leistungswerte L1 bis L10 ermittelt. Weiterhin ist beispielsweise ein Soll-Leistungswert L-soll von 1 vorgegeben, wobei auch andere Sollwerte für den Leistungswert eingestellt werden können (zum Beispiel 0,9). Aus L-soll minus L1 ergibt sich ein erster Zwischen-Überwachungswert ZW1 (L-soll - L1 = ZW1). Aus L-soll minus L2 ergibt sich ein zweiter Zwischen-Überwachungswert ZW2. Aus einer Addition der Zwischen-Überwachungswerte ZW1 bis ZW10 ergibt sich eine Gesamtfehlersumme W. Die Gesamtfehlersumme W kann als Überwachungswert angesehen werden.

Durch die automatisierte Überwachung kann man es sich ersparen, den Leistungsfaktor manuell durch Experten überwachen zu lassen. Beispielsweise dient eine Betrachtung einer Zeitreihe in unregelmäßigen Zeitintervallen zur Einordnung des aktuellen Gesundheitszustands. Zur Überwachung können in einer Ausgestaltung auch statische Grenzwerte für den Leistungsfaktor gesetzt werden, was in einigen Betriebspunkten allerding zu Falschindikationen führen kann. So wird bei einer statischen Betrachtung ein fixer Grenzwert bestimmt und, wenn der Leistungsfaktor diesen unterschreitet, kommt es zu einer Warnung. Auch bei einer zeitlichen manuellen Auswertung der Grenzwerte können sich Fehler ergeben. Es ist also ein sehr spezifisches Expertenwissen notwendig, welches eine tiefe Datenaggregation voraussetzt. Eine Analyse kann mit hohem personellem Aufwand verbunden sein. Bei einer manuellen Überwachung sind sehr lange Zeiträume im Betrieb manuell zu beobachten und hinsichtlich der Ausschlusskriterien zu bewerten. Durch die Bildung eines Überwachungswertes kann dieses Problem überwunden werden, wobei der Überwachungswert aus einer Vielzahl von Einzelwerten gebildet wird bzw. von diesen abhängt, wobei die Einzelwerte von Leistungsfaktoren eines Zeitraumes abhängen.

In einer Ausgestaltung des Verfahrens werden die Vielzahl von Einzelwerten aus einem Zeitraum entnommen, welcher insbesondere frei bestimmbar ist, wobei der Zeitraum insbesondere eine Länge von zumindest einer Minute aufweist bzw. eine Länge von Minuten bis Monate aufweist. Der zeitliche Abstand der verwendeten Einzelwerte innerhalb des Zeitraumes kann beispielsweise eine oder mehrere Sekunden (insbesondere also größer eine Sekunde) bzw. eine oder mehrere Minuten sein (insbesondere also größer eine Minute). Der Abstand ist insbesondere einstellbar. Der Abstand beträgt beispielsweise 10 Sekunden bis 120 Sekunden). Hierbei werden insbesondere nur Einzelwerte betrachtet, welche in einem stationären Betrieb der Synchronmaschine ermittelt wurden.

In einer Ausgestaltung des Verfahrens wird im gebildeten Überwachungswert eine Gewichtung nach der Zeit durchgeführt. Der Überwachungswert kann also aus einer Summe von Werten gebildet werden, wobei die Werte abhängig vom Alter unterschiedlich gewichtet werden. Ist beispielsweise ein erster Wn und ein zweiter Wert Wn+1 gegeben, so kann ein neuer Wert durch einen Vergessensfaktor Alpha gebildet werden: Überwachungswert = Wn+1 + (Wn * (1-Alpha)), wobei Alpha kleiner 1 ist.

In einer Ausgestaltung des Verfahrens werden Einzelwerte abhängig vom Betriebszustand der Synchronmaschine verwendet. Leistungsfaktoren werden also insbesondere nicht berücksichtigt, wenn diese z.B. in einem Hochlauf der Synchronmaschine ermittelt wurden. Leistungsfaktoren werden insbesondere dann berücksichtigt, wenn diese in einem stationären Zustand der Synchronmaschine ermittelt wurden.

Diese Bewertung setzt aber ein Expertenwissen voraus, da in vielen Betriebszuständen der Leistungsfaktor vom Sollwert abweicht. Dies ist bedingt z.B. durch An- und Abfahren des Motors, Lastwechsel, prozessuale Drehzahlsollwerteänderungen. Diese Betriebszustände müssen in die Bewertung einfließen.

In einer Ausgestaltung des Verfahrens wird durch den Überwachungswert eine Anomalie erkannt, wobei die Anomalie insbesondere die Erregereinrichtung betrifft. So kann beispielweise eine defekte Erregereinrichtung erkannt werden.

In einer Ausgestaltung des Verfahrens wird bei der Erfassung der Einzelwerte auch die Drehzahl der Synchronmaschine berücksichtigt. Beispielsweise kann der Leistungsfaktor mit dem Vorzeichen der Motordrehzahl multipliziert werden. So erfolgt die Überwachung drehzahlunabhängig.

Bei einer Überwachungseinrichtung einer Synchronmaschine wird insbesondere zur Überwachung einer Erregereinrichtung der Synchronmaschine die Überwachungseinrichtung in einem Stromrichter bzw. einer Regelung und/oder Steuerung der Synchronmaschine integriert, wobei die Überwachungseinrichtung zur Durchführung eines der beschriebenen Verfahren verwendbar ist.

Ein Computerprogrammprodukt weist eine Programmierung zur Durchführung eines der beschriebenen Verfahren auf, wobei das Computerprogrammprodukt insbesondere auf der Überwachungseinrichtung ablauffähig ist.

Im Folgenden wird die Erfindung beispielhaft anhand einer Figure näher dargestellt und erläutert.

Gemäß der Erfindung ist eine kontinuierliche und kontextbezogene Überwachung des Leistungsfaktors möglich. Das Ablaufdiagramm verdeutlicht mögliche einzelne Schritte und hebt mögliche Vorteile gegenüber der bisherigen manuellen Problemlösung (manuelle Expertenüberwachung bzw. Grenzwertbetrachtung) hervor. Dabei können nach der Erfindung alle nachfolgend beschriebenen Schritte oder auch nur ein Schritt oder nur ein ausgewählter Teil der im Folgenden beschriebenen Schritte durchgeführt werden:

### Schritt

### Vorverarbeitung 1:

### Multipliziere den neuen Leistungsfaktor mit dem Vorzeichen der Motordrehzahl -

Im ersten Schritt wird der aktuelle Leistungsfaktor mit dem Vorzeichen der Motordrehzahl multipliziert. Dies garantiert, dass negative Leistungsfaktoren nicht fälschlicherweise als fehlerhaft erkannt werden. Im Vergleich zur bisherigen Problemlösung werden hier zusätzliche Messwerte betrachtet, was die "Falsch-Positiv" Rate reduziert ("Falsch-Positiv" Rate: Zeitpunkte, die fälschlicherweise als anormal eingestuft werden und somit unnötigerweise Aufmerksamkeit beanspruchen).

### Schritt

### Filter 2:

### Betrachte nur Zeitstempel in denen die Maschine stationär betrieben wird -

Im zweiten Schritt werden nur relevante Zeitstempel von Einzelwerten gefiltert. Als irrelevant gelten insbesondere Messwerte (Einzelwerte), die einen bestimmten Zeitraum vom nächsten Aus-Zustand entfernt liegen.

Zeiträume, in denen die Maschine nicht läuft (inkl. z.B. Anfahr- und Herunterfahrzeiten), werden nicht in die Betrachtung hinzugezogen werden und somit die Falsch-Positiv Rate verringert. Anders als bei der bisherigen Problemlösung werden zusätzliche Informationen in Betracht gezogen und der Leistungsfaktor im Gesamtkontext betrachtet, anstatt nur dessen Rohwerte einzuordnen.

### Schritt

### Fehlersumme 3:

### Addiere die Abweichung des Leistungsfaktors zur Gesamtfehlersumme, welche vorher mit einem Vergessensfaktor (alpha) multipliziert wird -

Nach der Datenvorbereitung wird der Fehler (Differenz zwischen tatsächlichem Leistungsfaktor und erwartetem Wert 1) zu einer Gesamtfehlersumme addiert. Diese wird vorher mit einem Vergessensfaktor (α <1) multipliziert, wodurch vorherige Fehler weniger stark gewichtet werden. Dadurch nimmt die Gesamtfehlersumme im Laufe der Zeit wieder ab und zurückliegende Fehler werden nicht dauerhaft weitergetragen.

### Schritt

### Grenzwert 4:

### Erkenne eine Anomalie über eine Gesamtfehlersumme -

Überschreitet die Fehlersumme einen Wert, wird der Zeitpunkt als anormal eingeordnet. Einzelne Messfehler werden nicht als anomal klassifiziert. Stattdessen werden die Fehler aufsummiert und erst bei Überschreitung einer Grenze wird eine Anomalie erkannt. Das Vorgehen gewährleistet die Reduzierung der Falsch-Positiv Rate. Erst wenn eine Anhäufung an unerwarteten Leistungsfaktoren auftaucht, wird eine Anomalie erkannt. Außerdem fallen größere Abweichungen stärker ins Gewicht, da die Fehlersumme bei stärkeren Abweichungen schneller anwächst.

### Schritt

### Maximale Fehlersumme 5:

### Stelle sicher, dass die Fehlersumme ein Maximum nicht übersteigt -

Die Fehlersumme wird auf ein Maximum begrenzt. Dadurch wird sichergestellt, dass sie nicht zu groß wird und somit ein Austausch der defekten Erregereinrichtung zeitnah festgestellt wird. Durch den Vergessensfaktor reduziert sich die Fehlersumme bei Normalbetrieb, wodurch nach ausreichend normalen Messwerten der Status automatisch auf normal gesetzt wird.

Ein Vorteil der Erfindung kann beispielsweise dadurch bestehen, dass nach Reparatur einer Erregereinrichtung kein manueller Eintrag der Reparatur erfolgen muss. Nach einer gewissen Zeit erkennt der Algorithmus die Änderung anhand der Daten nämlich automatisch.

Durch die beschriebenen Ausführungen ergibt sich eine automatisierte Überwachung des Leistungsfaktors. Durch eine kontextbezogene Fehlersumme (z.B. durch die ausschließliche Verwendung von Werten in einem stationären Betrieb), werden insbesondere Ausreißer ignoriert, Anhäufungen erkannt und Änderungen dynamisch bestimmt.

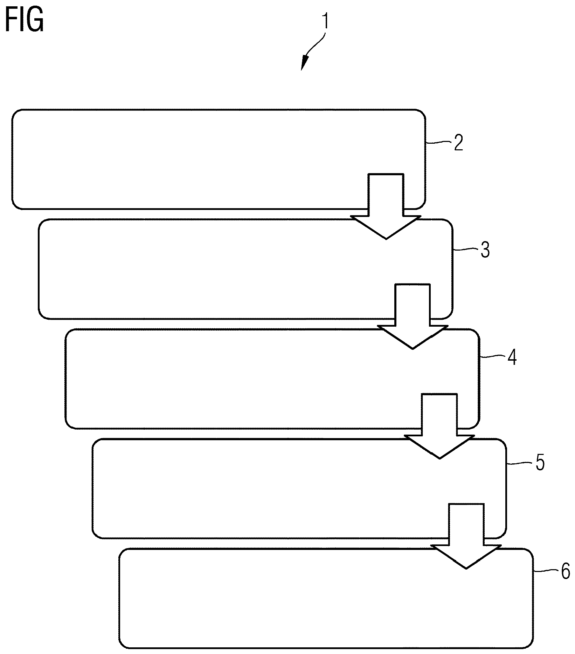

## Patentansprüche

1. Verfahren zur Überwachung einer Synchronmaschine, insbesondere zur Überwachung einer Erregereinrichtung einer Synchronmaschine, wobei ein vom Leistungsfaktor der Synchronmaschine abhängiger Einzelwert gemessen wird, wobei aus einer Vielzahl von Einzelwerten und/oder davon abhängigen Werten ein Überwachungswert (3) gebildet wird.

2. Verfahren nach Anspruch 1, wobei die Vielzahl von Einzelwerten aus einem Zeitraum sind, welcher insbesondere frei bestimmbar ist, wobei der Zeitraum insbesondere eine Länge von zumindest einer Minute bzw. eine Länge von Minuten bis Monate aufweist.

3. Verfahren nach Anspruch 1 oder 2, wobei im gebildeten Überwachungswert eine Gewichtung (3) nach der Zeit erfolgt.

4. Verfahren nach einem der Ansprüche 1 bis 3, wobei Einzelwerte abhängig vom Betriebszustand (2) der Synchronmaschine verwendet werden.

5. Verfahren nach einem der Ansprüche 1 bis 4, wobei durch den Überwachungswert eine Anomalie erkannt wird, wobei die Anomalie insbesondere die Erregereinrichtung betrifft.

6. Verfahren nach einem der Ansprüche 1 bis 5, wobei mit den Einzelwerten auch die Drehzahl (1) der Synchronmaschine berücksichtigt wird.

7. Überwachungseinrichtung einer Synchronmaschine, insbesondere zur Überwachung einer Erregereinrichtung der Synchronmaschine, wobei die Überwachungseinrichtung in einem Stromrichter bzw. einer Regelung und/oder Steuerung der Synchronmaschine integriert ist, wobei die Überwachungseinrichtung zur Durchführung eines Verfahrens, nach einem der Ansprüche 1 bis 6 verwendbar ist.

8. Computerprogrammprodukt zur Durchführung eines Verfahrens nach einem der Ansprüche 1 bis 6, bei Ablauf auf einer Überwachungseinrichtung nach Anspruch 7.
